# EUROPEAN PATENT SPECIFICATION

(11) **EP 0 987 889 B1**
(45) Date of publication and mention of the grant of the patent: **13.01.2010**
(21) Application number: 99307248.7
(22) Date of filing: 14.09.1999
(51) Int. Cl.: H04N 5/445

(54) **Receiver for and method of receiving digital television signals in a multi-frequency network**
Empfänger und Empfangsverfahren für digitale Fernsehsignale in einem Mehrfrequenz-Netzwerk
Récepteur et méthode de réception de télévision numérique en réseau de fréquences multiples

(30) Priority: 15.09.1998 KR 9837928
(43) Date of publication of application: 22.03.2000
(73) Proprietor: SAMSUNG ELECTRONICS CO., LTD., Suwon-City, Kyungki-do (KR)
(72) Inventor: Kim, In-ki, Suwon-city, Kyungki-do (KR)
(74) Representative: Robinson, Ian Michael

(56) References cited:
- EP-A- 0 735 776
- US-A- 5 701 161
- US-A- 5 768 539
- US-A- 5 790 198

## Description

The present invention relates to a receiver for receiving a multiplex signal, and more particularly, to a digital terrestrial television (DTTV) receiver capable of receiving a multiple frequency network (MFN) and a method for receiving the MFN.

The use of digital terrestrial broadcasting has begun in Europe. Terrestrial broadcasting is constituted of a plurality of networks. A receivable network is determined by the intensity of a radio wave. When a network is selected, a network information table (NIT) is parsed. A program association table (PAT) and a program map table (PMT) are sequentially parsed. Accordingly, it is possible to receive audio and/or video (A/V) data. However, in current receivers, it is not possible to access other networks, while moving up and down a channel. Therefore, a user cannot view the broadcasts of various networks even if the receiver can receive various radio waves.

In a digital satellite broadcast, there are receivers which can receive only one satellite broadcast and receivers which can simultaneously receive various satellite broadcasts. However, a digital terrestrial broadcast scheme has not yet been defined. It has been recommended that digital terrestrial broadcasting is realized in consideration of the MFN and that a man-machine interface (MMI) can be performed with respect to the network.

With a view to solve or reduce the above problem, it is an aim of embodiments of the present invention to provide a receiver by which it is possible to receive the broadcasts of all receivable networks and to thus let a user select a network.

It is another aim of embodiments of the present invention to provide a receiver for reproducing an audio/video (A/V) signal for the time taken to parse a tuned channel while detecting all receivable networks and displaying the parsed channel information using an on screen display (OSD).

It is still another aim of embodiments of the present invention to provide an MFN receiving method for reproducing the A/V signal after parsing only a program association table (PAT) and a program map table (PMT) so that the time for which a user waits for networks to be searched will seem shorter, and displaying the parsed channel information using the OSD when a network information table (NIT) is parsed.

Various receivers are known for use in television broadcasting. US-A-5701161 discloses a receiver for constantly scanning predetermined analogue video channels for specific additional information, thus for parsing the channels. This document forms the pre-characterising portion of the claims appended hereto.

EP-A-0735776 relates to selectively filtering transport stream packets from a digital multi-program audio/video transport stream for decoding. US-A-5790198 discloses a system for transmitting TV schedule information and associated dated via the VBI of an analogue video signal and processing such information on a receiver side. US-A-5768539 relates to set-top terminals for digital television broadcast.

According to the present invention there is provided an apparatus and method as set forth in the appended claims. Preferred features of the invention will be apparent from the dependent claims, and the description which follows.

According to a first aspect of the invention, there is provided a receiver for receiving a multiplex signal (MUX), the multiplex signal having a plurality of frequency channels, the receiver comprising: a parser for parsing an audio and/or video (A/V) signal and additional information of each frequency channel of the received multiplex signal tuned to in turn; and a signal processor for reproducing the audio and/or video signal and displaying currently received channel information according to the parsed additional information; characterized by: a controller for controlling the signal processor so that the audio and/or video signal of the channel currently tuned to is reproduced for the time taken to parse the additional information, so that the additional information of said channel is displayed when all the additional information has been parsed, and the reproduction of the audio and/or video signal is paused when the tuning of the next channel is started, each channel being tuned to in turn.

Preferably, the signal processor reproduces the audio and/or video signal of the channel currently tuned to when a program said channel have been parsed by the parser and displays the additional information of said channel as a menu when the network information table (NIT) of said channel has been parsed by the parser.

Preferably, the controller recognizes a boot mode, a network search mode, and a network change mode which are set through the user interface.

The receiver may further comprise a first tuner including a memory for storing tuned channel information, for tuning any receivable multiplex signals and changing a channel to the lowest channel of the network having the most channels when all receivable networks have been searched; and a demodulator and error correction decoder for demodulating the multiplex signals tuned to by the first tuner, error correction decoding the demodulated data, and providing error correction decoded data.

The receiver may further comprise an interface for providing identification information of a smart card to the controller and providing the error correction decoded data to the parser in order to receive a fee-charged broadcast channel.

The signal processor may comprise: an audio and/or video decoder and graphic generator for decoding the audio and/or video signal provided from the parser so as to provide decoded audio and/or video data, and generating graphic data for constituting the information of parsed channels as a menu using an on screen display (OSD); a video encoder for encoding the decoded video data and providing generating an encoded video signal; a video signal processor for processing the encoded video signal and/or graphic data to be suitable for a display; and an audio signal processor for processing the decoded audio data to be suitable for an audio output device.

The first tuner may receive an analog terrestrial signal and use the received analog terrestrial signal as another input of the video signal processor.

The receiver may further comprise a second tuner for tuning to the analog terrestrial signal, wherein the output of the second tuner is used as another input of the video signal processor.

The audio and/or video decoder and graphic generator generates graphic data so that the channel information including the name of a network, transport stream identification information, an ultra high frequency (UHF) channel information, and the strength of a signal is displayed in colors which vary according to the strength of the signal.

According to another aspect of the invention, there is provided a method for receiving a multiplex signal (MUX) having a plurality of frequency channels, comprising the steps of: (a) tuning each receivable channel of the received multiplex signal in turn and parsing the audio and/or video (A/V) signal and the additional information of the currently tuned channel; and (b) reproducing the audio and/or video signal, and displaying the additional information of the parsed channel when all the additional information of the currently tuned channel has been parsed; characterized by the further step of: (c) reproducing the audio and/or video signal of the channel currently tuned to for the time taken to parse the additional information of said channel, displaying the additional information of said channel as a menu when all the additional information of the searched channel has been parsed, and pausing the reproduction of the audio and/or video signal when tuning to the next channel is started, each channel being tuned in turn.

The channel information may be a network list comprising the name of a network, transport stream (TS) identification information, an ultra high frequency (UHF) channel number, and the strength of a signal, and the channel information is displayed as on screen display (OSD) information in colors which vary according to the strength of the signal.

In the step (c) the audio and/or video signal of the channel currently tuned to is reproduced when the program association table (PAT) and the program map table (PMT) of said channel have been parsed in the step (b) and the additional information of said channel is displayed by the on-screen display (OSD) when the network information table (NIT) of said channel has been parsed in the step (b).

Preferably, the method further comprises the step of: in step (a) recognizing modes set through a user interface and scanning each receivable channel in turn.

The mode settable through the user interface is preferably a boot mode.

The method may further comprise the steps of: (e) is turning off the menu when all the channels have been searched; and (f) searching for the network having the most channels and moving the channel to the channel to the lowest channel number of the network.

The step (e) may further comprise the step (el) of displaying a message informing that all the receivable channels are searched.

The mode settable through the user interface is preferably a network search mode settable when a network environment is changed.

The method may further comprise the step of (g) displaying a menu according to a network search mode when the network search mode is set, wherein the steps (a) through (f) are performed when an execution command is input by a user through the menu.

After performing the steps (a) through (f), the method may further comprising the steps of: (i) displaying all the currently effective networks searched in the step (f) when a network change mode is set through the user interface; (j) selecting network to be changed; and (k) changing the channel to the lowest channel of the changed network.

For a better understanding of the invention, and to show how embodiments of the same may be carried into effect, reference will now be made, by way of example, to the accompanying diagrammatic drawings in which:
Figure 1 shows a digital terrestrial television (DTTV) receiver capable of receiving a multiple frequency network (MFN);
Figure 2 is a block diagram according to an embodiment of a DTTV receiver to which the present invention is applied;
Figure 3 is an example showing an on screen display (OSD) screen constituted in a boot mode;
Figure 4 is an example showing an OSD screen constituted in a network search mode;
Figure 5 is an example showing an OSD screen constituted in a network change mode; and
Figure 6 is a flowchart illustrating an embodiment of a method for receiving the MFN of the present invention.

Hereinafter, preferred embodiments of a receiver capable of receiving a multiple frequency network (MFN) and a method for receiving the MFN according to the present invention will be described with reference to the attached drawings.

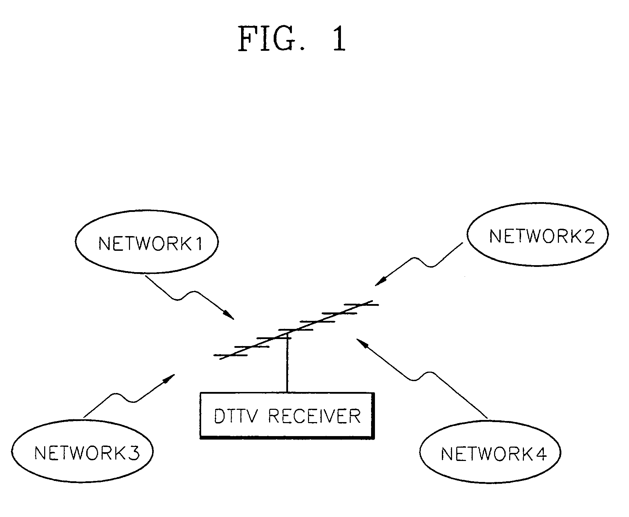

As an example to which the present invention is applied, a DTTV receiver can receive the radio waves of various networks (networks 1, 2, 3, and 4 in Figure 1) as shown in Figure 1. Therefore, a user can view the broadcasts of all receivable networks, can display the list of the receivable networks as a menu using, for example, an on-screen display (OSD), can select a desired network among a plurality of networks displayed in the menu, and can change the selected network.

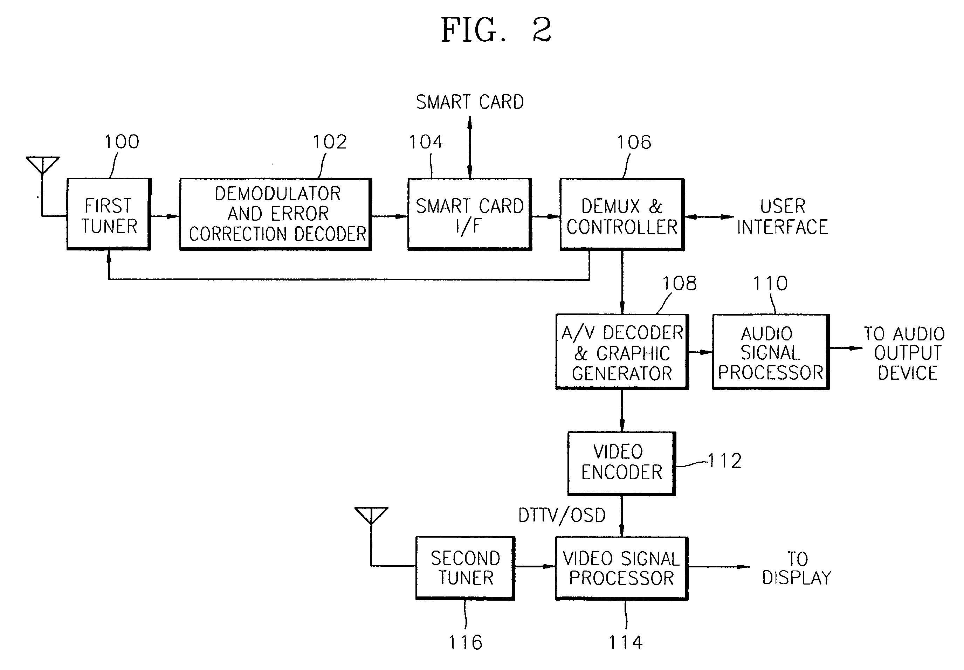

Figure 2 is a block diagram of a DTTV receiver to which the present invention is applied. A first tuner 100 automatically searches networks in a boot mode where a user initially turns on a power supply and searches for receivable networks when, for example, a network search mode is set according to the user's selection. In particular, the information of the multiplex signal (MUX) tuned to by scanning an entire ultra high frequency (UHF) channel is stored in an internal memory. The content of the tuned MUX is provided to a demodulator and error correction decoder 102. The information of the MUX includes the name of the network, a transport stream identifier (TS ID), the UHF channel, and the received signal strength. The information is stored in an internal RAM table for helping to optimally tune to the MUXs and providing availability to the installer and user. The received signal strength is obtained from the bit error ratio (BER) of the corrected data provided by the convolution decoder of the demodulator.

The demodulator and error correction decoder 102 demodulates the MUX tuned to by the first tuner 100, error correction decodes the demodulated data, and produces the error correction decoded data.

When a smart card (an integrated chip IC card) is inserted into a receiver in order to view a fee-charged broadcast channel, a smart card interface (I/F) 104 provides the ID information of the smart card to a demultiplexer (DEMUX) and controller 106.

The DEMUX of the DEMUX and controller 106 parses the tuned MUX data. In the case of the fee-charged broadcast channel, the controller checks the ID information of the smart card provided by the smart card interface 104 and the DEMUX descrambles the tuned MUX data according to the check result and parses the descrambled MUX data. The controller recognizes which mode (a boot mode, a network search mode, and a network change mode) is set via the user interface and realizes a man-machine interface (MMI).

Since it takes a long time for the DEMUX to parse the NIT of the tuned MUX, only the PAT and PMT are first parsed and the A/V stream is provided to an A/V decoder and graphic generator 108. The A/V decoder and graphic generator 108 decodes the A/V stream and provides the decoded audio data and video data to an audio signal processor 110 and a video encoder 112, respectively.

The audio signal processor 110 processes the decoded audio data to a signal suitable for an audio output device such as speakers or a pair of head phones. The video encoder 112 encodes the decoded video data, a video signal processor 114 processes the encoded video data into a signal suitable for a display and provides the processed signal to the display.

When the NIT of the currently tuned MUX is parsed by the DEMUX and controller 106, the A/V decoder and graphic generator 108 generates graphic data for displaying the network list of the tuned MUX as OSD information. At this time, video data for a background image is displayed through the display. The audio data is output through the audio output device.

When the network list of the currently tuned MUX is constituted, the DEMUX and controller 106 provides a control signal to the first tuner 100 for requesting the next MUX to be searched and pauses the reproduced A/V signal. Then, the first tuner 100 tunes the next MUX.

Additionally, the video signal processor 114 selects either the encoded video signal and/or OSD data (DTTV/OSD) provided by the video encoder 112 or the analog terrestrial signal tuned to by a second tuner 116, processes the selected signal into a signal suitable for the display, and provides the processed signal to the display. The video signal provided by A/V devices (not shown) can be further input to the video signal processor 114. Though not shown in the drawing, it is well known that the audio signal of the analog terrestrial signal tuned by the second tuner 116 and the audio signal provided by the A/V devices can be further input to the audio signal processor 110. The A/V decoder and graphic generator 108, the audio signal processor 110, the video encoder 112, and the video signal processor 114 shown in Figure 2 may be referred to as a signal processor.

The first tuner and the second tuner for tuning a digital terrestrial signal and the analog terrestrial signal are provided in the present invention. However, the present invention can be applied to a receiver for simultaneously receiving the digital terrestrial signal and the analog terrestrial signal using one tuner and to a receiver for receiving only the digital terrestrial signal.

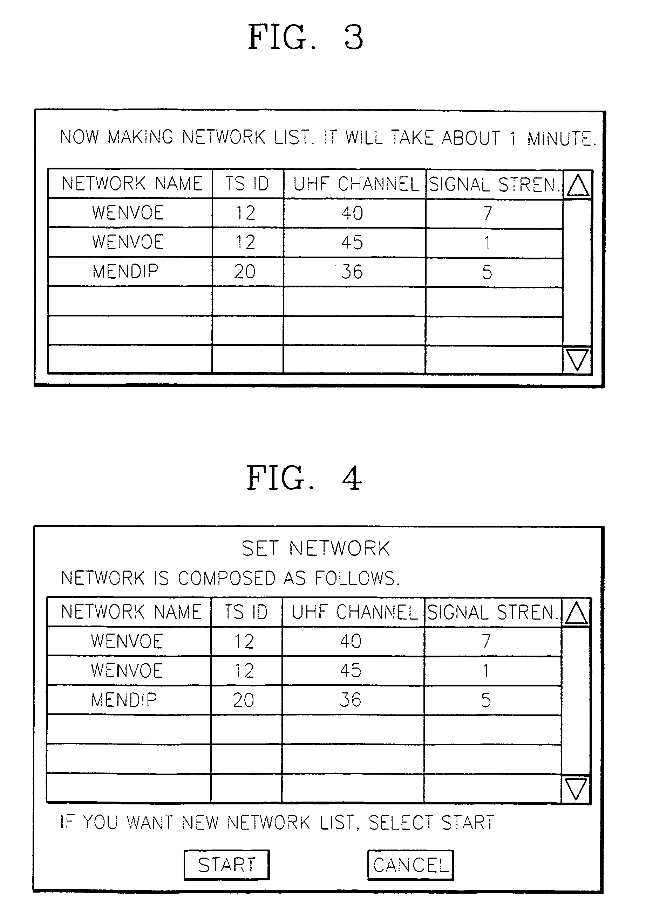

In order to facilitate understanding of the operation of the receiver shown in Figure 2, examples of the generation of OSD according to the boot mode, the network search mode, and the network change mode will be described with reference to FIGs. 3 through 5.

### 1) Boot Mode

A pop-up menu as shown in Figure 3, is shown in the boot mode which is performed when a user initially turns on the power supply after purchasing a receiver. This will be described in more detail.
Step 1: All UHF channels are scanned by the first tuner 100.
Step 2: When the DEMUX parses the PAT and the PMT of the currently tuned MUX, the A/V signal is reproduced by the signal processor.
Step 3: The DEMUX awaits and parses the NIT and provides the parsed data to the controller.
Step 4: The controller controls the A/V decoder and graphic generator 108 so that the network list, that is, the name of the network, the transport stream identifier Tis I D, the UHF channel, and the strength of the signal with respect to the tuned MUX can be displayed as the OSD information as shown in Figure 3 on the basis of the parsed data.
   At this time, the A/V decoder and graphic generator 108 generates the graphic data so that the color of the displayed network list varies according to the signal strength. For example, when the signal strength is satisfactory, a green network list is displayed. When the signal strength is marginally satisfactory, a yellow network list is displayed. When the signal strength is unsatisfactory, a red network list is displayed.
Step 5: The channel tuned to is changed by the first tuner 100 after displaying the network list of the currently tuned MUX and step 2 through step 5 are repeated after pausing the reproduced A/V signal.
Step 6: The OSD screen shown in Figure 3 disappears when all the channels have been scanned and a message is displayed informing the user that all the receivable networks have been found.
Step 7: The controller selects for the network which has the most channels among the searched networks and the first tuner 100 changes the channel to the lowest channel of the selected network.

### 2) Network Search Mode

This mode, in which the network list is reconstituted, is executed if the user moves to a new location or the network environment is changed. When the network search mode is selected by the user interface, a pop-up shown in Figure 4 is shown.

When a new network list is to be constituted, "START" should be selected in the OSD screen shown in Figure 4. Then, the network list is constituted by performing step 1 through step 7.

### 3) Network Change Mode

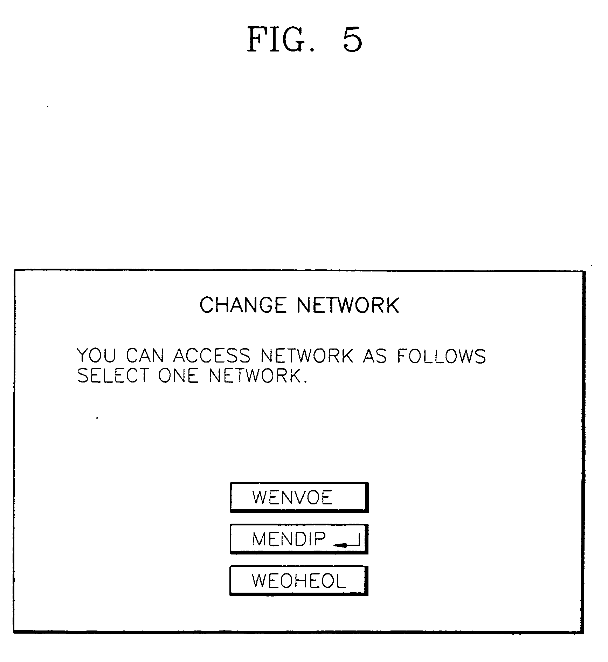

The pop-up menu shown in Figure 5 is shown when the network is to be changed after the boot mode, or when the network search mode is performed, and the list of currently effective networks is displayed on a screen. When the user selects one among the networks, the network list to be changed is first stored in the RAM in which the list of the networks is stored. The channel is changed to the lowest channel of the network changed to.

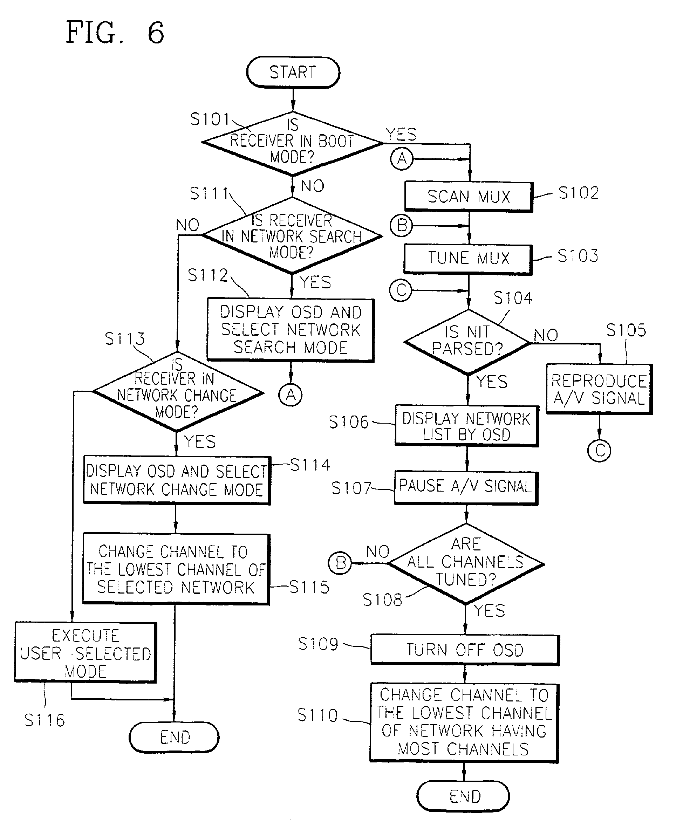

Figure 6 is a flowchart illustrating an embodiment of the method for receiving the MFN of the present invention, by which the above three modes can be performed. However, each mode may have a flowchart by which the mode can be performed.

In Figure 6, it is determined whether the receiver is in the boot mode when the power supply is initially turned on (step S101). If the receiver is in the boot mode, all the MUXs are scanned (step S102) and are tuned (step S103). Then, it is determined whether the NIT of the tuned MUX has been parsed. If the NIT has not been parsed, the A/V signal is first reproduced so that the time for which the user waits for the networks to be searched will seem shorter (step S105).

When the NIT has been parsed in the step S104, the OSD for the boot mode is automatically displayed and the network list of the currently tuned MUX is displayed as shown in Figure 3 (step S106). Then, the A/V signal is paused (step S107). Subsequently, it is determined whether all the channels are tuned (step S108). If not all the channels have been tuned to, the process returns to the step S103 of tuning the MUX. If all the channels have been tuned to, the OSD for the boot mode is turned off (step S109). In the step S109, it is possible to display a message indicating that all the networks have been searched, while turning off the OSD. After performing the step S109, the channel is changed to the lowest channel of the network which has the most number of channels among the searched networks and the process is terminated (step S110).

It is determined whether the receiver is in the network search mode when the receiver is not in the boot mode in the step S101 (step S111). When the receiver is in the network search mode, the OSD for the network search mode is displayed as shown in Figure 4 and the process returns to the step S102 where the MUXs are scanned according to the start execution command of the network search mode selected by the user (step S112).

It is determined whether the receiver is in the network change mode when the receiver is not in the network search mode in the step S111 (step S113). If the receiver is not in the network change mode, a user-selected mode is executed and the process is terminated (step S116). When the receiver is in the network change mode, the OSD information showing the currently effective networks is displayed as shown in Figure 5. When the network to be changed is selected by the user (step S114), the channel is changed to the lowest channel of the selected network and the process is terminated (step S115).

The present invention can be applied to a satellite broadcast receiver as well as the terrestrial receiver such as the DTTV. Namely, the present invention can be used not only as a satellite broadcast receiver capable of simultaneously receiving a plurality of satellite broadcasts but also as a terrestrial broadcast receiver capable of receiving a signal multiplex of a plurality of programs.

According to the present invention, it is possible to provide various services and programs to a user who uses the DTTV, to let the user select desired networks, that is, various items of information, and to activate local broadcasts focused on specific areas, to thus improve the quality of a service and to thus narrow the gap between areas.

Also, it is possible to make the time for which the user waits for networks to be searched seem shorter by reproducing the A/V signal after parsing only the PAT and the PMT and displaying the searched network list as the OSD when the NIT is parsed while the A/V signal is reproduced.

## Claims

1. A receiver for receiving a multiplex signal (MUX), the multiplex signal having a plurality of frequency channels, the receiver comprising:
a parser for parsing an audio and/or video (A/V) signal and additional information of each frequency channel of the received multiplex signal tuned to in turn; and
a signal processor (108-114) for reproducing the audio and/or video signal and displaying currently received channel information according to the parsed additional information;
**characterized by**:
a controller (106) for controlling the signal processor so that the audio and/or video signal of the channel currently tuned to is reproduced (S105) for the time taken to parse (S104) the additional information of the channel, so that the additional information of said channel is displayed (S106) when all the additional information has been parsed, and the reproduction of the audio and/or video signal is paused (S107) when the tuning (S102; S103) of the next channel is started, each channel being tuned to in turn.

2. The receiver of claim 1, wherein the signal processor (108-114) reproduces the audio and/or video signal of the channel currently tuned to when a program association table (PAT) and a program map table (PMT) of said channel have been parsed by the parser and displays the additional information of said channel as a menu when the network information table (NIT) of said channel has been parsed by the parser.

3. The receiver of claim 1 or 2, wherein the controller (106) recognizes a boot mode (S101), a network search mode (S111), and a network change mode (S113) which are set through the user interface.

4. The receiver of claim 3, further comprising:
a first tuner (100) including a memory for storing tuned channel information, for tuning to any of the receivable multiplex signals and changing a channel to the lowest channel of the network having the most channels when all receivable networks have been searched; and
a demodulator and error correction decoder (102) for demodulating the multiplex signals tuned to by the first tuner (100), error correction decoding the demodulated data, and providing error correction decoded data.

5. The receiver of claim 4, further comprising an interface (104) for providing identification information of a smart card to the controller (106) and providing the error correction decoded data to the parser in order to receive a fee-charged broadcast channel.

6. The receiver of claim 4, wherein the signal processor comprises:
an audio and/or video decoder and graphic generator (108) for decoding the audio and/or video signal provided from the parser so as to provide decoded audio and/or video data, and generating graphic data for constituting the information of parsed channels as a menu using an on-screen display (OSD);
a video encoder (112) for encoding the decoded video data and generating an encoded video signal;
a video signal processor (114) for processing the encoded video signal and/or graphic data to be suitable for a display; and
an audio signal (110) processor for processing the decoded audio data to be suitable for an audio output device.

7. The receiver of claim 6, wherein the first tuner (100) receives an analog terrestrial signal and uses the received analog terrestrial signal as another input of the video signal processor (114).

8. The receiver of claim 6 or 7, further comprising a second tuner (116) for tuning to the analog terrestrial signal, wherein the output of the second tuner (116) is used as another input of the video signal processor (114).

9. The receiver of claim 6, 7 or 8, wherein the audio and/or video decoder and graphic generator (108) generates graphic data so that the channel information including the name of a network, transport stream identification information, an ultra high frequency (UHF) channel information, and the strength of a signal is displayed in colors which vary according to the strength of the signal.

10. A method for receiving a multiplex signal (MUX) having a plurality of frequency channels, comprising the steps of:
(a) tuning to each receivable channel of the received multiplex signal in turn (S103) and parsing the audio and/or video (A/V) signal and the additional information of the currently tuned channel (S104); and
(b) reproducing the audio and/or video signal (S105), and displaying the additional information of the parsed channel when all the additional information of the currently tuned channel has been parsed (S106);
**characterized by** the further step of:
(c) reproducing the audio and/or video signal of the channel currently tuned to (S105) for the time taken to parse (S104) the additional information of said channel, displaying the additional information of said channel as a menu (S106) when all the additional information of the searched channel has been parsed, and pausing the reproduction of the audio and/or video signal (S107) when tuning to the next channel is started (S102, S103), each channel being tuned in turn.

11. The method of claim 10, wherein the channel information is a network list comprising the name of a network, transport stream (TS) identification information, an ultra high frequency (UHF) channel number, and the strength of a signal, and wherein the channel information is displayed as on-screen display (OSD) information in colors which vary according to the strength of the signal.

12. The method of claim 11, wherein, in the step (c), the audio and/or video signal of the channel currently tuned to is reproduced when the program association table (PAT) and the program map table (PMT) of said channel have been parsed in the step (b) and the additional information of said channel is displayed by the on-screen display (OSD) when the network information table (NIT) of said channel has been parsed in the step (b).

13. A method according to claim 10, further comprising the step of:
in step (a) recognizing modes set through a user interface and scanning each receivable channel in turn.

14. The method of claim 13, wherein a mode settable through the user interface is a boot mode.

15. The method of claim 13 or 14, further comprising the steps of:
(e) turning off the menu when all the channels have been searched; and
(f) searching for the network having the most channels and tuning to the lowest channel number of the network (S110).

16. The method of claim 15, wherein the step (e) further comprises the step (el) of displaying a message informing that all the receivable channels have been searched.

17. The method of claim 15 or 16, wherein a mode settable through the user interface is a network search mode settable when a network environment is changed.

18. The method of claim 17, further comprising the step (g) of displaying a menu according to a network search mode when the network search mode is set, wherein the steps (a) through (f) are performed when an execution command is input by a user through the menu.

19. The method of claim 15, after performing the steps (a) through (f), further comprising the steps of:
(i) displaying all the currently effective networks searched in the step (f) when a network change mode is set through the user interface;
(j) selecting a network to be changed to; and
(k) changing the channel to the lowest channel of the selected network.

## Patentansprüche

1. Empfänger zum Empfangen eines Multiplexsignals (MUX), wobei das Multiplexsignal mehrere Frequenzkanäle aufweist, wobei der Empfänger Folgendes umfasst:
einen Parser zum Parsen eines Audio- und/oder Video- bzw. A/V-Signals und zusätzlicher Information jedes der Reihe nach eingestellten Frequenzkanals des empfangenen Multiplexsignals; und
einen Signalprozessor (108-114) zum Wiedergeben des Audio- und/oder Videosignals und zum Anzeigen von Informationen des gerade empfangenen Kanals gemäß den geparsten zusätzlichen Informationen;
**gekennzeichnet durch**:
eine Steuerung (106) zum Steuern des Signalprozessors dergestalt, dass das Audio-und/oder Videosignal des gerade eingestellten Kanals für die Zeit, die es dauert, um die zusätzlichen Informationen des Kanals zu parsen (S104), wiedergegeben wird (S105), so dass die zusätzlichen Informationen des Kanals angezeigt werden (S106), wenn alle zusätzlichen Informationen geparst worden sind, und die Wiedergabe des Audio- und/oder Videosignals angehalten wird (S107), wenn das Einstellen (S102; S103) des nächsten Kanals gestartet wird, wobei jeder Kanal der Reihe nach eingestellt wird.

2. Empfänger nach Anspruch 1, wobei der Signalprozessor (108-114) das Audio- und/oder Videosignal des gerade eingestellten Kanals wiedergibt, wenn eine Programmassoziationstabelle (PAT) und eine Programmabbildungstabelle (PMT) des Kanals durch den Parser geparst worden sind, und die zusätzlichen Informationen des Kanals als ein Menü anzeigt, wenn die Netzwerkinformationstabelle (NIT) des Kanals durch den Parser geparst worden ist.

3. Empfänger nach Anspruch 1 oder 2, wobei die Steuerung (106) einen Boot-Modus (S101), einen Netzwerksuchmodus (S111) und einen Netzwerkänderungsmodus (S113) erkennt, die durch die Benutzeroberfläche gesetzt werden.

4. Empfänger nach Anspruch 3, ferner umfassend:
einen ersten Tuner (100) mit einem Speicher zum Speichern von Informationen des eingestellten Kanals, zum Einstellen auf beliebige der empfangbaren Multiplexsignale und zum Ändern eines Kanals zu dem niedrigsten Kanal des Netzwerks, das die meisten Kanäle aufweist, wenn alle empfangbaren Netzwerke durchsucht worden sind; und
einen Demodulator und Fehlerkorrekturdecodierer (102) zum Demodulieren der durch den ersten Tuner (100) eingestellten Multiplexsignale, zur Fehlerkorrekturdecodierung der demodulierten Daten und zur Bereitstellung von fehlerkorrekturdecodierten Daten.

5. Empfänger nach Anspruch 4, ferner mit einer Schnittstelle (104), um Identifikationsinformationen einer Smart Card der Steuerung (106) zuzuführen und die fehlerkorrekturdecodierten Daten dem Parser zuzuführen, um einen gebührenfälligen ausgestrahlten Kanal zu empfangen.

6. Empfänger nach Anspruch 4, wobei der Signalprozessor Folgendes umfasst:
einen Audio- und/oder Videodecodierer und einen Grafikgenerator (108) zum Decodieren des aus dem Parser bereitgestellten Audio- und/oder Videosignals, um so decodierte Audio- und/oder Videodaten bereitzustellen, und zum Erzeugen von Grafikdaten zum Bilden der Informationen geparster Kanäle als ein Menü unter Verwendung einer Bildschirmanzeige (OSD);
einen Videocodierer (112) zum Codieren der decodierten Videodaten und zum Erzeugen eines codierten Videosignals;
einen Videosignalprozessor (114) zum Verarbeiten des codierten Videosignals und/oder der Grafikdaten, damit sie für eine Anzeige geeignet sind; und
einen Audiosignalprozessor (110) zum Verarbeiten der decodierten Audiodaten, damit sie für eine Audioausgabeeinrichtung geeignet sind.

7. Empfänger nach Anspruch 6, wobei der erste Tuner (100) ein analoges terrestrisches Signal empfängt und das empfangene analoge terrestrische Signal als eine weitere Eingabe des Videosignalprozessors (114) verwendet.

8. Empfänger nach Anspruch 6 oder 7, ferner mit einem zweiten Tuner (116) zum Einstellen eines analogen terrestrischen Signals, wobei die Ausgabe des zweiten Tuners (116) als weitere Eingabe des Videosignalprozessors (114) verwendet wird.

9. Empfänger nach Anspruch 6, 7 oder 8, wobei der Audio- und/oder Videodecodierer und der Grafikgenerator (108) Grafikdaten dergestalt erzeugen, dass die Kanalinformationen den Namen eines Netzwerks, Transportstrom-Identifikationsinformationen, Ultrahochfrequenz- bzw. UHF-Kanalinformatio-nen und die Stärke eines Signals umfassen, die in Farben angezeigt wird, die gemäß der Stärke des Signals variieren.

10. Verfahren zum Empfangen eines Multiplexsignals (MUX), das mehrere Frequenzkanäle aufweist, mit den folgenden Schritten:
(a) Einstellen jedes empfangbaren Kanals des empfangenen Multiplexsignals der Reihe nach (S103) und Parsen des Audio- und/oder Video- bzw. A/V-Signals und der zusätzlichen Informationen des gerade eingestellten Kanals (S104); und
(b) Wiedergeben des Audio- und/oder Videosignals (S105) und Anzeigen der zusätzlichen Informationen des geparsten Kanals, wenn alle zusätzlichen Informationen des gerade eingestellten Kanals geparst worden sind (S106);
**gekennzeichnet durch** den folgenden weiteren Schritt:
(c) Wiedergeben des Audio- und/oder Videosignals des gerade eingestellten Kanals (S105) für die Zeit, die es in Anspruch nimmt, um die zusätzlichen Informationen des Kanals zu parsen (S104), Anzeigen der zusätzlichen Informationen des Kanals als ein Menü (S106), wenn alle zusätzlichen Informationen des durchsuchten Kanals geparst worden sind, und Anhalten der Wiedergabe des Audio- und/oder Videosignals (S107), wenn das Einstellen des nächsten Kanals begonnen wird (S102, S103), wobei jeder Kanal der Reihe nach eingestellt wird.

11. Verfahren nach Anspruch 10, wobei die Kanalinformationen eine Netzwerkliste sind, die den Namen eines Netzwerks, Transportstrom- bzw. TS-Identifikationsinformationen, eine Ultrahochfrequenz- bzw. UHF-Kanalnummer und die Stärke eines Signals umfassen und wobei die Kanalinformationen als Informationen für eine Bildschirmanzeige (OSD) in Farben angezeigt werden, die gemäß der Stärke des Signals variieren.

12. Verfahren nach Anspruch 11, wobei im Schritt (c) das Audio- und/oder Videosignal des gerade eingestellten Kanals wiedergegeben wird, wenn die Programmassoziationstabelle (PAT) und die Programmabbildungstabelle (PMT) des Kanals im Schritt (b) geparst worden sind und die zusätzlichen Informationen des Kanals durch die Bildschirmanzeige (OSD) angezeigt werden, wenn die Netzwerkinformationstabelle (NIT) des Kanals in Schritt (b) geparst worden ist.

13. Verfahren nach Anspruch 10, ferner mit dem folgenden Schritt:
im Schritt (a) Erkennen von durch eine Benutzeroberfläche eingestellten Betriebsarten und Scannen jedes empfangbaren Kanals der Reihe nach.

14. Verfahren nach Anspruch 13, wobei eine durch die Benutzeroberfläche einstellbare Betriebsart ein Boot-Modus ist.

15. Verfahren nach Anspruch 13 oder 14, ferner mit den folgenden Schritten:
(e) Ausschalten des Menüs, wenn alle Kanäle durchsucht worden sind; und
(f) Suchen nach dem Netzwerk, das die meisten Kanäle aufweist, und Einstellen der niedrigsten Kanalnummer des Netzwerks (S110).

16. Verfahren nach Anspruch 15, wobei Schritt (e) ferner den Schritt (e1) des Anzeigens einer Nachricht umfasst, die informiert, dass alle empfangbaren Kanäle durchsucht worden sind.

17. Verfahren nach Anspruch 15 oder 16, wobei eine durch die Benutzeroberfläche einstellbare Betriebsart ein Netzwerksuchmodus ist, der einstellbar ist, wenn eine Netzwerkumgebung geändert wird.

18. Verfahren nach Anspruch 17, ferner mit dem Schritt (g) des Anzeigens eines Menüs gemäß einem Netzwerksuchmodus, wenn der Netzwerksuchmodus eingestellt ist, wobei die Schritte (a) bis (f) ausgeführt werden, wenn durch einen Benutzer über das Menü ein Ausführungsbefehl eingegeben wird.

19. Verfahren nach Anspruch 15, das nach dem Ausführen der Schritte (a) bis (f) ferner die folgenden Schritte umfasst:
(i) Anzeigen aller gerade effektiven in dem Schritt (f) durchsuchten Netzwerke, wenn ein Netzwerkänderungsmodus durch die Benutzeroberfläche eingestellt wird;
(j) Auswählen eines Netzwerks, zu dem gewechselt werden soll; und
(k) Ändern des Kanals zu dem niedrigsten Kanal des ausgewählten Netzwerks.

## Revendications

1. Récepteur destiné à recevoir un signal multiplexé (MUX), le signal multiplexé ayant une pluralité de canaux de fréquences, le récepteur comprenant :
un analyseur syntaxique pour analyser syntaxiquement un signal audio et/ou vidéo (A/V) et des informations supplémentaires concernant chaque canal de fréquence du signal multiplexé reçu sur lequel une syntonisation est effectuée, tour à tour ; et
un processeur de signal (108-114) pour reproduire le signal audio et/ou vidéo et afficher des informations concernant le canal en cours de réception en conformité avec les informations supplémentaires analysées syntaxiquement ;
**caractérisé par** :
une unité de commande (106) destinée à commander le processeur de signal de façon à ce que le signal audio et/ou vidéo du canal sur lequel la syntonisation a été effectuée soit reproduit (S105) pendant le temps mis pour analyser syntaxiquement (S104) les informations supplémentaires concernant le canal, afin que les informations supplémentaires concernant ledit canal soient affichées (S106) lorsque la totalité des informations supplémentaires a été analysée syntaxiquement, et à ce que la reproduction du signal audio et/ou vidéo soit mise en pause (S107) lorsque la syntonisation (S102 ; S103) du canal suivant est commencée, une syntonisation étant effectuée sur chaque canal tour à tour.

2. Récepteur selon la revendication 1, dans lequel le processeur de signal (108-114) reproduit le signal audio et/ou vidéo du canal sur lequel la syntonisation a été effectuée lorsqu'une table d'association de programmes (PAT) et une table de correspondance de programmes (PMT) dudit canal ont été analysées syntaxiquement par l'analyseur syntaxique, et affiche les informations supplémentaires concernant ledit canal sous la forme d'un menu lorsque la table d'informations concernant le réseau (NIT) dudit canal a été analysée syntaxiquement par l'analyseur syntaxique.

3. Récepteur selon la revendication 1 ou 2, dans lequel l'unité de commande (106) reconnaît un mode de démarrage (S101), un mode de recherche de réseau (S111) et un mode de changement de réseau (S113) qui sont réglés par l'intermédiaire d'une interface utilisateur.

4. Récepteur selon la revendication 3, comprenant en outre :
un premier syntoniseur (100) comportant une mémoire destinée à stocker des informations concernant les canaux syntonisés, pour effectuer une syntonisation sur l'un quelconque des signaux multiplexés pouvant être reçus et pour changer de canal afin de passer au canal le plus bas du réseau ayant le plus grand nombre de canaux lorsque tous les réseaux pouvant être reçus ont été recherchés ; et
un démodulateur et un décodeur à correction d'erreurs (102) pour démoduler les signaux multiplexés sur lesquels une syntonisation est effectuée par le premier syntoniseur (100), pour décoder avec correction d'erreurs les données démodulées et pour fournir des données décodées avec correction d'erreurs.

5. Récepteur selon la revendication 4, comprenant en outre une interface (104) destinée à fournir des informations d'identification d'une carte à puce à l'unité de commande (106) et à fournir les données décodées avec correction d'erreurs à l'analyseur syntaxique afin de recevoir un canal de diffusion payant.

6. Récepteur selon la revendication 4, dans lequel le processeur de signal comprend :
un décodeur audio et/ou vidéo et un générateur graphique (108) pour décodeur le signal audio et/ou vidéo fourni par l'analyseur syntaxique afin de fournir des données audio et/ou vidéo décodées, et de générer des données graphiques destinées à constituer les informations concernant les canaux analysés syntaxiquement sous la forme d'un menu au moyen d'un affichage à l'écran (OSD) ;
un codeur vidéo (112) destiné à coder les données vidéo décodées et à générer un signal vidéo codé ;
un processeur de signal vidéo (114) destiné à traiter le signal vidéo codé et/ou les données graphiques afin qu'elles soient appropriées pour un affichage ; et
un processeur de signal audio (110) destiné à traiter les données audio décodées afin qu'elles soient appropriées pour un dispositif de sortie audio.

7. Récepteur selon la revendication 6, dans lequel le premier syntoniseur (100) reçoit un signal terrestre analogique et utilise le signal terrestre analogique reçu en tant qu'autre entrée du processeur de signal vidéo (114).

8. Récepteur selon la revendication 6 ou 7, comprenant en outre un second syntoniseur (116) destiné à effectuer une syntonisation sur le signal terrestre analogique, dans lequel la sortie du second syntoniseur (116) est utilisé en tant qu'autre entrée du processeur de signal vidéo (114).

9. Récepteur selon la revendication 6, 7 ou 8, dans lequel le décodeur audio et/ou vidéo et le générateur graphique (108) génèrent des données graphiques afin que les informations concernant les canaux, qui comprennent le nom d'un réseau, des informations d'identification de flux de transport, des informations concernant des canaux à ultra haute fréquence (UHF) et l'intensité d'un signal, soient affichées dans des couleurs qui varient en fonction de l'intensité du signal.

10. Procédé pour recevoir un signal multiplexé (MUX) ayant une pluralité de canaux de fréquences, comprenant les étapes consistant à :
(a) effectuer une syntonisation sur chaque canal pouvant être reçu du signal multiplexé reçu tour à tour (S103) et analyser syntaxiquement le signal audio et/ou vidéo (A/V) et les informations supplémentaires concernant le canal sur lequel la syntonisation a été effectuée (S104) ; et
(b) reproduire le signal audio et/ou vidéo (S105) et afficher les informations du canal analysé syntaxiquement lorsque toutes les informations supplémentaires du canal sur lequel la syntonisation a été effectuée ont été analysées syntaxiquement (5106) ;
**caractérisé par** l'étape supplémentaire consistant à :
(c) reproduire le signal audio et/ou vidéo du canal sur lequel la syntonisation a été effectuée (S105) pendant le temps mis pour analyser syntaxiquement (S104) les informations supplémentaires concernant ledit canal, afficher les informations supplémentaires concernant ledit canal sous la forme d'un menu (S106) lorsque la totalité des informations supplémentaires concernant le canal recherché ont été analysée syntaxiquement, et mettre en pause la reproduction du signal audio et/ou vidéo (S107) lorsque la syntonisation sur le canal suivant est commencée (S102, S103), la syntonisation sur chaque canal étant effectuée tour à tour.

11. Procédé selon la revendication 10, dans lequel les informations concernant les canaux sont une liste de réseaux comprenant le nom d'un réseau, des informations d'identification de flux de transport (TS), un numéro de canal à ultra haute fréquence (UHF), et l'intensité d'un signal, et dans lequel les informations concernant les canaux sont affichées sous la forme d'informations d'affichage à l'écran (OSD) dans des couleurs qui varient en fonction de l'intensité du signal.

12. Procédé selon la revendication 11, dans lequel, lors de l'étape (c), le signal audio et/ou vidéo du canal sur lequel la syntonisation a été effectuée est reproduit lorsque la table d'association de programmes (PAT) et la table de correspondance de programmes (PMT) dudit canal ont été analysées syntaxiquement lors de l'étape (b) et les informations supplémentaires concernant ledit canal sont affichées par l'affichage à l'écran (OSD) lorsque la table d'informations concernant les réseaux (NIT) dudit canal a été analysée syntaxiquement lors de l'étape (b).

13. Procédé selon la revendication 10, comprenant en outre l'étape consistant à :
lors de l'étape (a), reconnaître des modes sélectionnés par l'intermédiaire d'une interface utilisateur et analyser tour à tour chaque canal pouvant être reçu.

14. Procédé selon la revendication 13, dans lequel un mode pouvant être sélectionné par l'intermédiaire de l'interface utilisateur est un mode de démarrage.

15. Procédé selon la revendication 13 ou 14, comprenant en outre les étapes consistant à :
(e) désactiver le menu lorsque tous les canaux ont été recherchés ; et
(f) rechercher le réseau ayant le plus de canaux et effectuer une syntonisation sur le numéro de canal le plus bas du réseau (S110).

16. Procédé selon la revendication 15, dans lequel l'étape (e) comprend en outre l'étape (e1) consistant à afficher un message informant que tous les canaux pouvant être reçus ont été recherchés.

17. Procédé selon la revendication 15 ou 16, dans lequel un mode pouvant être sélectionné par l'intermédiaire de l'interface utilisateur est un mode de recherche de réseaux pouvant être sélectionné lorsqu'un environnement de réseau est modifié.

18. Procédé selon la revendication 17, comprenant en outre l'étape (g) consistant à afficher un menu conformément à un mode de recherche de réseau lorsque le mode de recherche de réseau est sélectionné, dans lequel les étapes (a) à (f) sont exécutées lorsqu'une commande d'exécution est fournie en entrée par un utilisateur par l'intermédiaire du menu.

19. Procédé selon la revendication 15, comprenant en outre, après exécution des étapes (a) à (f), les étapes consistant à :
(i) afficher tous les réseaux en cours d'activité à l'instant courant recherchés lors de l'étape (f) lorsqu'un mode de changement de réseau est sélectionné par l'intermédiaire de l'interface utilisateur ;
(j) choisir un réseau vers lequel le changement doit être effectué ; et
(k) changer de canal pour passer au canal le plus bas du réseau sélectionné.
